# EUROPÄISCHE PATENTSCHRIFT

(11) **EP 1 247 962 B1**
(45) Veröffentlichungstag und Bekanntmachung des Hinweises auf die Patenterteilung: **21.06.2006**
(21) Anmeldenummer: 01108678.2
(22) Anmeldetag: 06.04.2001
(51) Int. Cl.: F02D 9/02, F01P 3/20, F02D 41/06

(54) **Verfahren zur Beschleunigten Innenraumaufwärmung bei Dieselfahrzeugen**
Method for fast heating of the passenger compartment of diesel vehicles
Procédé de chauffage rapide de l'habitacle pour véhicules diesel

(43) Veröffentlichungstag der Anmeldung: 09.10.2002
(73) Patentinhaber: Ford Global Technologies, LLC., Dearborn MI 48126 (US)
(72) Erfinder: Moraal, Paul Eduard, 6291 VP Vaals (NL); Hills, Peter, Leigh-on-sea, Essex. SS9 2DU (GB); Kuenstler, Johannes, 52064 Aachen (DE)
(74) Vertreter: Drömer, Hans-Carsten

(56) Entgegenhaltungen:
- WO-A-00/58613
- DE-A- 19 921 505
- US-A- 5 735 238
- PATENT ABSTRACTS OF JAPAN vol. 015, no. 025 (M-1071), 21. Januar 1991 (1991-01-21) & JP 02 267358 A (TOYOTA MOTOR CORP), 1. November 1990 (1990-11-01)

## Beschreibung

Die Erfindung betrifft ein Verfahren zum Aufwärmen der Kabine eines Kraftfahrzeugs mit Dieselmotor, wobei der Kabine im Dieselmotor anfallende Abwärme zugeführt wird. Ferner betrifft die Erfindung eine Regelungsanordnung für die Kabinenheizung und den Dieselmotor eines Kraftfahrzeugs, enthaltend
- einen Temperatursensor für die Temperatur des Dieselmotors;
- einen Drucksensor für den Ansaugdruck des Dieselmotors; sowie
- eine steuerbare Drosselklappe für die Luftzufuhr zum Dieselmotor.

Heizungssysteme für die Kabine eines Kraftfahrzeugs beziehen ihre Wärmeenergie in der Regel aus der im Verbrennungsmotor erzeugten Abwärme. Beim Starten eines auf niedrige Umgebungstemperaturen abgekühlten Kraftfahrzeugs ergibt sich daraus das Problem, dass erst dann Heizenergie für die Kabine zur Verfügung steht, wenn der Motor warm gelaufen ist. Aus diesem Grunde werden häufig Zusatzheizungen für den Kabinenraum vorgesehen, welche in der Startphase des Kraftfahrzeugs die benötigte Wärmeenergie bereitstellen können. Nachteilig hieran ist jedoch der erforderliche Aufwand für die Installation und den Betrieb eines solchen zusätzlichen Aggregates, welches in der Regel nur für kurze Übergangsphasen beim Betrieb des Fahrzeuges benötigt wird.

Zur Beschleunigung des Aufwärmens eines Dieselmotors ist es aus der JP 11324819 sowie der JP 11-148375 bekannt, die Luftzufuhr zum Motor zu drosseln beziehungsweise ganz zu schließen und gleichzeitig eine verstärkte Abgasrückführung zuzulassen. Die verstärkte Rezirkulation von Abgasen in den Einlass des Dieselmotors soll dabei einen schnelleren Anstieg der Temperatur des Motors bewirken. Die genannten Maßnahmen werden nach kurzer Zeit bei Erreichen einer vorgegebenen Mo-tordrehzahl wieder abgeschaltet.

Demgegenüber war es Aufgabe der vorliegenden Erfindung, ein Verfahren und eine Regelungsanordnung für ein Kraftfahrzeug mit einem Dieselmotor bereitzustellen, welche ein schnelleres Aufwärmen der Kabine des Kraftfahrzeugs aus einem ausgekühlten Zustand heraus erlauben.

Diese Aufgabe wird durch ein Verfahren mit den Merkmalen des Anspruchs 1 sowie eine Regelungsanordnung mit den Merkmalen des Anspruchs 9 gelöst. Vorteilhafte Ausgestaltungen sind in den Unteransprüchen enthalten.

Bei dem Verfahren zum Aufwärmen der Kabine eines Kraftfahrzeugs mit Dieselmotor wird der Kabine im Dieselmotor produzierte Abwärme zugeführt, und die Temperatur des Dieselmotors wird direkt oder indirekt gemessen. Falls diese gemessene Temperatur unter einem vorgegebenen ersten Grenzwert T₁ liegt, wird unter Vorgabe eines reduzierten Ansaugdruckes MAP_ref die Luftzufuhr zum Dieselmotor so lange gedrosselt, bis die direkt oder indirekt gemessene Temperatur des Dieselmotors einen vorgegebenen zweiten Grenzwert T₂ überschreitet.

Das Verfahren beruht somit zunächst darauf, dass die Temperatur des Dieselmotors überwacht wird. Falls diese Temperatur unter dem ersten Grenzwert T₁ liegt, wird die Durchführung eines besonderen Aufwärmprogramms initiiert. Dieses Aufwärmprogramm besteht darin, dass ein reduzierter Ansaugdruck MAP_ref festgelegt und anschließend über die Drosselung der Luftzufuhr eingestellt wird. Durch die Vorgabe von typischerweise stark reduzierten Ansaugdrücken und eine entsprechend starke Drosselung der Luftzufuhr steigen die Pumpverluste des Motors, und die gesamte Flussrate durch den Motor wird reduziert. Beide Effekte tragen erheblich zu einer schnelleren Erwärmung des Motors bei, was wiederum der Heizung der Kabine zugute kommt. Das Fahrzeug kann daher schneller auf für die Insassen angenehme Temperaturen aufgewärmt werden. Hierdurch kann unter Umständen auf zusätzliche Heizeinrichtungen in Fahrzeugen verzichtet werden, welche in kalten Klimaregionen (z.B. Skandinavien, Nord-USA oder Kanada) verwendet werden.

Für die Bestimmung der Temperatur des Dieselmotors sind verschiedene Vorgehensweisen denkbar. Diese Temperatur kann zum Beispiel direkt über die Zylinderkopftemperatur bestimmt werden, oder aber indirekt über die Temperatur des Kühlmittels, welches durch den Dieselmotor geleitet wird.

Der Wert MAP_ref des reduzierten Ansaugdruckes, welcher durch die Drosselung der Luftzufuhr eingestellt werden soll, wird in vorteilhafter Weise anhand eines vorgegebenen Tabellenspeichers in Abhängigkeit von der Temperatur des Dieselmotors, von der Motordrehzahl und/oder von der Motorlast festgelegt. Der einzustellende Ansaugdruck stellt demnach nicht eine konstante Größe dar, sondern ist den Betriebsparametern des Kraftfahrzeugs optimal angepasst.

Gemäß einer Weiterbildung des Verfahrens wird der vorgegebene reduzierte Ansaugdruck MAP_ref in Abhängigkeit von der Gaspedalposition und/oder der Änderungsrate der Gaspedalposition zu MAP_ref_mod modifiziert, um gute Fahreigenschaften des Kraftfahrzeugs zu gewährleisten. Dadurch wird sichergestellt, dass das Kraftfahrzeug noch in ausreichendem Maße auf eine Betätigung des Gaspedals durch den Fahrer reagiert und damit dessen Wünschen an das Fahrverhalten folgt. Die genannten Abhängigkeiten können insbesondere so ausgestaltet werden, dass bei Überschreiten eines vorgegebenen Schwellwertes für die Gaspedalposition und/oder deren Änderungsrate die Drosselung der Luftzufuhr aufgehoben beziehungsweise vermindert wird, um die volle Motorleistung für den Antrieb bereitzustellen.

Weiterhin wird der vorgegebene reduzierte Ansaugdruck MAP_ref vorzugsweise dann erhöht, wenn das Luft-Kraftstoff-Verhältnis unter ein vorgegebenes Minimum fällt. Hierdurch wird vermieden, dass der Motor in einen instabilen Betriebszustand mit unzureichenden Steuerungsmöglichkeiten übergeht.

Wie aus den obigen Ausführungen hervorgeht, sind zu Beginn und zum Ende des Aufwärmprogramms sowie bei besonderen Bedingungen auch während der Ausführung des Aufwärmprogramms Änderungen des vorgegebenen Ansaugdruckes notwendig. Vorzugsweise werden diese Änderungen rampenförmig vorgenommen. Das heißt, dass der jeweilige alte und neue Wert des Ansaugdruckes durch eine lineare Beziehung stetig ineinander übergehen. Hierdurch wird verhindert, dass unerwünschte sprunghafte Änderungen des Kraftfahrzeugverhaltens eintreten.

Gemäß einer anderen Weiterbildung des Verfahrens wird die Abgasrückführung (EGR) des Dieselmotors geschlossen, falls die Temperatur des Dieselmotors unter dem ersten Grenzwert T₁ liegt. Diese Maßnahme führt zu einem erhöhten Kraftstoffverbrauch des Dieselmotors und damit zu einem schnelleren Anstieg seiner Temperatur.

Als weitere unterstützende Maßnahme für ein Aufwärmen des Dieselmotors ist es möglich, elektrische Lasten solange einzuschalten, bis die Temperatur des Dieselmotors einen zweiten Grenzwert T₂ überschreitet. Das Zuschalten elektrischer Verbraucher erhöht die Last des Dieselmotors und trägt auf diese Weise zu einem schnelleren Aufwärmen bei. Vorzugsweise werden dabei solche elektrischen Verbraucher zugeschaltet, deren Tätigkeit vom Fahrer nicht wahrgenommen werden kann, also etwa die Windschutzscheibenheizung oder die Glühkerzen. Bei Erreichen des dritten Temperaturgrenzwertes werden diese Verbraucher ausgeschaltet beziehungsweise auf den vom Fahrer vorgegebenen Wert zurückgesetzt.

Die Erfindung betrifft weiterhin eine Regelungsanordnung für die Kabinenheizung und den Dieselmotor eines Kraftfahrzeugs, wobei die Regelungsanordnung mit einem Temperatursensor für die Temperatur T des Dieselmotors, mit einem Drucksensor für den Ansaugdruck MAP des Dieselmotors und mit einer steuerbaren Drosselklappe für die Luftzufuhr zum Dieselmotor gekoppelt ist. Die Regelanordnung ist so eingerichtet, dass diese ein Verfahren der oben erläuterten Art ausführen kann. Das heißt, dass die Regelungsanordnung über den Temperatursensor direkt oder indirekt die Temperatur T des Dieselmotors misst und, falls diese Temperatur unter einem ersten Grenzwert T₁ liegt, über die Drosselklappe die Luftzufuhr zum Dieselmotor derart reduziert, dass ein aktuell vorgegebener Wert MAP_ref für den Ansaugdruck erreicht wird. Die Einhaltung dieses Wertes für den Ansaugdruck kann über den Drucksensor kontrolliert und geregelt werden. Mit einer derartigen Regelungsanordnung ist ein schnelles Aufheizen einer ausgekühlten Kabine eines Kraftfahrzeugs möglich, da der Dieselmotor eine beschleunigte Aufwärmphase durchläuft.

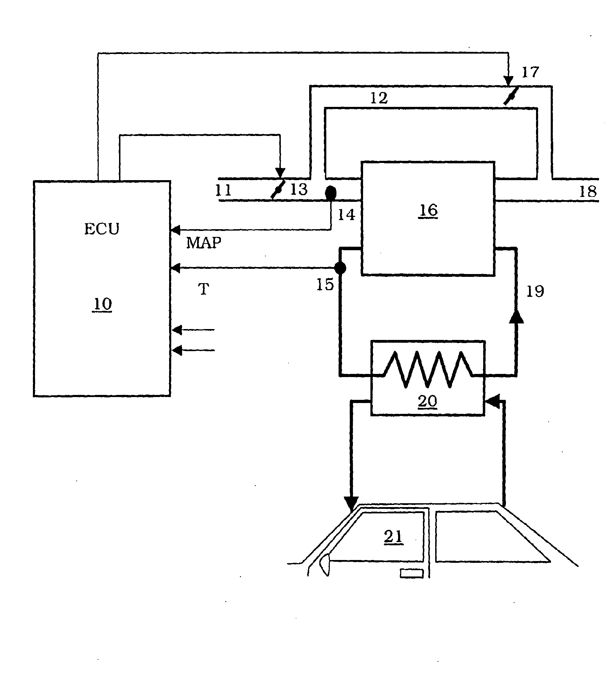

Im Folgenden wird die Erfindung mit Hilfe der Figur beispielhaft näher erläutert.

Die einzige Abbildung zeigt schematisch die Komponenten einer Regelungsanordnung für die Kabinenheizung und den Dieselmotor eines Kraftfahrzeugs.

Das genannte Kraftfahrzeug wird von einem Dieselmotor 16 angetrieben, welcher einen Einlasskrümmer 11 für die Zufuhr angesaugter Luft und einen Auslasskrümmer 18 für die Abgabe verbrauchter Abgase aufweist. Optional ist eine Abgasrückführung 12 (EGR) von dem Auslasskrümmer 18 zum Einlasskrümmer 11 vorgesehen, wobei die Rückflussrate über ein EGR-Ventil 17 gesteuert werden kann.

Der Dieselmotor 16 ist an einen Kühlmittelkreislauf 19 angeschlossen. Die im Dieselmotor 16 produzierte Abwärme wird vom Kühlmittel dieses Kreislaufes aufgenommen und zu dem ebenfalls im Kühlmittelkreislauf 19 befindlichen Wärmetauscher 20 transportiert. Dort kann sie an die Umgebungsluft und insbesondere an einen Heizmittelkreislauf abgegeben werden, welcher für eine Erwärmung der Fahrgastkabine 21 des Kraftfahrzeugs sorgt.

Bei einem Start des Kraftfahrzeugs in einer kalten Umgebung ergibt sich das Problem, dass sowohl die Kabine 21 als auch der Motor 16 ausgekühlt sind. Um dennoch möglichst schnell Abwärme aus dem Motor 16 für eine Beheizung der Kabine 21 gewinnen zu können, wird die nachfolgend beschriebene spezielle Ausgestaltung und Betriebsweise der elektronischen Motorsteuerung 10 (ECU) vorgeschlagen.

Die Motorsteuerung 10 ist mit einem Temperatursensor 15 verbunden, welcher die Temperatur im Kühlmittelkreislauf 19 misst. Ferner ist sie mit einem Drucksensor 14 für den Ansaugdruck MAP im Einlasskrümmer 11 verbunden. Darüber hinaus erhält die Motorsteuerung 10 noch weitere Messwerte (nicht dargestellt) über den Betriebszustand des Motors und des Fahrzeugs, wie etwa die Motordrehzahl, die Gaspedalstellung und dergleichen.

Ausgangsseitig nimmt die Motorsteuerung 10 insbesondere Einfluss auf die Stellungen der Drosselklappe 13 sowie des EGR-Ventils 17.

Mit dem beschriebenen Aufbau lässt sich dann das folgende Verfahren für eine beschleunigte Aufwärmphase des Dieselmotors 16 durchführen:
Zunächst ermittelt die Motorsteuerung 10 beim Starten des Kraftfahrzeugs über den Temperatursensor 15 die Temperatur T des Dieselmotors 16.
Falls diese Temperatur T unterhalb eines vorgegebenen, einstellbaren ersten Grenzwerts T₁ von zum Beispiel 0°C liegt, werden die nachfolgend aufgezählten Maßnahmen ausgeführt:
   a) Zuerst wird das EGR-Ventil 17 geschlossen.
   b) Dann werden elektrische Verbraucher (nicht dargestellt) eingeschaltet, um eine höhere Belastung des Motors 16 zu erzeugen und auf diese Weise die Motortemperatur anzuheben. Vorzugsweise werden Verbraucher wie die Windschutzscheibenheizung oder die Glühkerzen eingeschaltet, da der Fahrer deren Tätigkeit nicht feststellen kann und daher durch diese nicht gestört wird.
   c) Sodann wird ein vorgegebener oder Referenz-Ansaugdruck MAP_ref aus einem vorgegebenen kalibrierbaren Kennfeld erzeugt. Eingangsgrößen für dieses Kennfeld sind die gemessene Motortemperatur T, die Motordrehzahl, die Motorbelastung und gegebenenfalls andere Motorbetriebsparameter. Der reduzierte Referenz-Ansaugdruck MAP_ref kann sehr niedrig sein, zum Beispiel im Leerlauf oder bei geringer Belastung etwa 40 bis 45 kPa.
      Der Referenz-Ansaugdruck MAP_ref wird dann gegebenenfalls zu einem modifizierten Ansaugdruck MAP_ref_mod umgewandelt. Dies ist z.B. dann der Fall, wenn die Gaspedalposition oder die Änderungsrate der Gaspedalposition es während Beschleunigungsphasen zur Sicherstellung guter Fahreigenschaften erforderlich machen, das Ausmaß der Einlassdrosselung zu verringern. Ferner kann eine Modifikation durch Erhöhung des Referenz-Ansaugdrucks MAP_ref stattfinden, wenn das Luft-Kraftstoff-Verhältnis unter ein kalibrierbares Minimum fällt.
   d) Der ermittelte Ansaugdruck MAP_ref beziehungsweise MAP_ref_mod wird - ausgehend vom aktuellen vorgegebenen Ansaugdruck - rampenförmig über eine kalibrierbare Zeitdauer eingestellt, um einen möglichst glatten Übergang vom ursprünglichen Wert zum gedrosselten Betrieb zu ermöglichen.
   e) Die Einlassdrosselklappe 13 wird dann von der Motorsteuerung 10 so betätigt, dass der vorgegebene Ansaugdruck MAP_ref beziehungsweise MAP_ref_mod angenommen wird. Insbesondere kann dabei ein Fehlersignal zwischen dem vorgegebenen Ansaugdruck MAP_ref oder MAP_ref_mod und dem tatsächlichen Ansaugdruck MAP zunächst durch einen Faktor gewichtet werden, um einer Druckunterschreitung entgegen zu wirken. Anschließend kann das gewichtete Fehlersignal einem nichtlinearen PI-Regler als Eingang zugeführt werden, wobei die Verstärkungsfaktoren des Reglers von der Drosselklappenposition abhängen. Diese Abhängigkeit der Verstärkungsfaktoren von der Drosselklappenposition dient der Berücksichtigung einer erhöhten Sensitivität der Drosselklappenposition auf den Ansaugdruck bei fast vollständig geschlossener Drosselklappe.
      Weiterhin kann die angesteuerte Drosselklappe 13 auch vollständig geöffnet (und der Integrator des PI-Reglers auf Null zurückgesetzt) werden, wenn die Änderungsrate der Gaspedalposition eine kalibrierbare Schwelle überschreitet. Auf diese Weise kann sichergestellt werden, dass das Fahrverhalten und das Fahrgefühl durch das Aufwärmprogramm nicht negativ beeinflusst werden.
   f) Wenn die gemessene Motortemperatur T einen zweiten vorgegebenen Grenzwert T₂ überschreitet, welcher höher oder gleich dem ersten Grenzwert T₁ ist, wird die Drosselung der Drosselklappe 13 deaktiviert, und die Motorsteuerung 10 kehrt zu ihrer normalen Betriebsweise zurück.

Das oben erläuterte Verfahren hat den Vorteil, dass die Abgastemperatur ansteigt und die Kühlmitteltemperatur im Kühlmittelkreislauf 19 rascher zunimmt. Dies führt zu einer erheblich schnelleren Erwärmung der Kabine 21 und damit zu einem höheren Komfort für die Fahrgäste nach einem Fahrzeugstart bei niedrigen Umgebungstemperaturen. Auf zusätzliche Heizmittel kann in dem Kraftfahrzeug daher in der Regel verzichtet werden.

## Patentansprüche

1. Verfahren zum Aufwärmen der Kabine (21) eines Kraftfahrzeugs mit Dieselmotor (16), wobei der Kabine im Dieselmotor anfallende Abwärme zugeführt wird,
**dadurch gekennzeichnet, dass** die Temperatur (T) des Dieselmotors (16) direkt oder indirekt gemessen wird, und dass, falls diese Temperatur unter einem ersten Grenzwert (T₁) liegt, die Luftzufuhr zum Dieselmotor zwecks Einstellung eines vorgegebenen reduzierten Ansaugdruckes (MAP_ref, MAP_ref_mod) so lange gedrosselt wird, bis die Temperatur (T) des Dieselmotors einen zweiten Grenzwert (T₂) überschreitet.

2. Verfahren nach Anspruch 1,
**dadurch gekennzeichnet, dass** die Temperatur (T) des Dieselmotors (16) über die Kühlmitteltemperatur und/oder die Zylinderkopftemperatur bestimmt wird.

3. Verfahren nach Anspruch 1 oder 2,
**dadurch gekennzeichnet, dass** der Wert des vorgegebenen reduzierten Ansaugdruckes (MAP_ref) aus einem vorgegebenen Tabellenspeicher in Abhängigkeit von der Temperatur (T) des Dieselmotors, der Motordrehzahl und/oder der Motorlast festgelegt wird.

4. Verfahren nach einem der Ansprüche 1 bis 3,
**dadurch gekennzeichnet, dass** der vorgegebene reduzierte Ansaugdruck (MAP_ref) in Abhängigkeit von der Gaspedalposition und/oder deren Änderungsrate verändert wird, um gute Fahreigenschaften sicherzustellen.

5. Verfahren nach einem der Ansprüche 1 bis 4,
**dadurch gekennzeichnet, dass** der vorgegebene reduzierte Ansaugdruck (MAP_ref) erhöht wird, wenn das Luft-Kraftstoff-Verhältnis unter ein vorgegebenes Minimum fällt.

6. Verfahren nach einem der Ansprüche 1 bis 5,
**dadurch gekennzeichnet, dass** die Änderungen des vorgegebenen Ansaugdruckes rampenförmig erfolgen.

7. Verfahren nach einem der Ansprüche 1 bis 6,
**dadurch gekennzeichnet, dass** die Abgasrückführung (12) geschlossen wird.

8. Verfahren nach einem der Ansprüche 1 bis 7,
**dadurch gekennzeichnet, dass**, falls die Temperatur (T) des Dieselmotors (16) unter dem ersten Grenzwert (T₁) liegt, elektrische Lasten eingeschaltet werden, bis die Temperatur (T) des Dieselmotors (16) einen zweiten Grenzwert (T₂) überschreitet.

9. Regelungsanordnung für die Kabinenheizung und den Dieselmotor eines Kraftfahrzeugs, enthaltend
- einen Temperatursensor (15) für die Temperatur des Dieselmotors (16),
- einen Drucksensor (14) für den Ansaugdruck (MAP) des Dieselmotors (16), und
- eine steuerbare Drosselklappe (13) für die Luftzufuhr zum Dieselmotor (16),
**dadurch gekennzeichnet, dass** die Regelungsanordnung derart eingerichtet ist, dass sie über den Temperatursensor (15) direkt oder indirekt die Temperatur (T) des Dieselmotors (16) misst und, falls diese Temperatur unter einem ersten Grenzwert (T₁) liegt, über die Drosselklappe (13) die Luftzufuhr zum Dieselmotor (16) derart reduziert, dass ein aktuell vorgegebener Wert (MAP_ref, MAP_ref_mod) für den Ansaugdruck erreicht wird, wobei die Einhaltung dieses Wertes (MAP_ref, MAP_ref_mod) für den Ansaugdruck über den Drucksensor (14) kontrollierbar ist, bis die Temperatur des Diesel motors einen zweiten Grezwert (T₂) überschreitet.

## Claims

1. Method for heating the cab (21) of a motor vehicle with a diesel engine (16), the cab being supplied with waste heat occurring in the diesel engine, **characterized in that** the temperature (T) of the diesel engine (16) is measured directly or indirectly, and **in that**, if this temperature is below a first limit value (T₁), the supply of air to the diesel engine is throttled, for the purpose of setting a predetermined reduced intake pressure (MAP_ref, MAP_ref_mod), until the temperature (T) of the diesel engine exceeds a second limit value (T₂).

2. Method according to Claim 1, **characterized in that** the temperature (T) of the diesel engine (16) is determined via the coolant temperature and/or the cylinder head temperature.

3. Method according to Claim 1 or 2, **characterized in that** the value of the predetermined reduced intake pressure (MAP_ref) is fixed from a predetermined table store as a function of the temperature (T) of the diesel engine, of the engine rotational speed and/or of the engine load.

4. Method according to one of Claims 1 to 3, **characterized in that** the predetermined reduced intake pressure (MAP_ref) is changed as a function of the accelerator pedal position and/or its rate of change, in order to ensure good driving properties.

5. Method according to one of Claims 1 to 4, **characterized in that** the predetermined reduced intake pressure (MAP_ref) is increased when the air/fuel ratio falls below a predetermined minimum.

6. Method according to one of Claims 1 to 5, **characterized in that** the changes in the predetermined intake pressure take place in ramp form.

7. Method according to one of Claims 1 to 6, **characterized in that** the exhaust-gas recirculation (12) is closed.

8. Method according to one of Claims 1 to 7, **characterized in that**, if the temperature (T) of the diesel engine (16) is below the first limit value (T₁), electrical loads are switched on until the temperature (T) of the diesel engine (16) exceeds the second limit value (T₂).

9. Regulating arrangement for the cab heating and the diesel engine of a motor vehicle, containing
- a temperature sensor (15) for the temperature of the diesel engine (16),
- a pressure sensor (14) for the intake pressure (MAP) of the diesel engine (16), and
- a controllable throttle valve (13) for the supply of air to the diesel engine (16),
**characterized in that** the regulating arrangement is set up in such a way that it measures the temperature (T) of the diesel engine (16) directly or indirectly via the temperature sensor (15) and, if this temperature is below a first limit value (T₁), reduces the supply of air to the diesel engine (16) via the throttle valve (13) such that a currently predetermined value (MAP_ref, MAP_ref_mod) is achieved for the intake pressure, it being possible to control the maintaining of this value (MAP_ref, MAP_ref_mod) for the intake pressure via the pressure sensor (14), until the temperature of the diesel engine exceeds a second limit value (T₂).

## Revendications

1. Procédé pour chauffer l'habitacle (21) d'un véhicule automobile équipé d'un moteur diesel (16), la chaleur perdue produite dans le moteur diesel étant acheminée à l'habitacle, **caractérisé en ce que** le température (T) du moteur diesel (16) est mesurée directement ou indirectement et que, si cette température est inférieure à un premier seuil (T₁), l'arrivée d'air vers le moteur diesel est restreinte en vue de régler une pression d'aspiration réduite prédéfinie (MAP ref, MAP ref mod) jusqu'à ce que la température (T) du moteur diesel dépasse un deuxième seuil (T₂) .

2. Procédé selon la revendication 1, **caractérisé en ce que** la température (T) du moteur diesel (16) est déterminée par le biais de la température du liquide de refroidissement et/ou de la température de la culasse.

3. Procédé selon la revendication 1 ou 2, **caractérisé en ce que** la valeur de la pression d'aspiration réduite prédéfinie (MAP_ref) est déterminée à partir d'une mémoire à tableau prédéfinie en fonction de la température (T) du moteur diesel, de la vitesse de rotation du moteur et/ou de la charge du moteur.

4. Procédé selon l'une des revendications 1 à 3, **caractérisé en ce que** la pression d'aspiration réduite prédéfinie (MAP ref) est modifiée en fonction de la position de la pédale d'accélération et/ou de la vitesse de sa modification afin de garantir de bonnes propriétés de conduite.

5. Procédé selon l'une des revendications 1 à 4, **caractérisé en ce que** la pression d'aspiration réduite prédéfinie (MAP_ref) est augmentée lorsque le rapport air/carburant devient inférieur à un minimum prédéfini.

6. Procédé selon l'une des revendications 1 à 5, **caractérisé en ce que** les modifications de la pression d'aspiration prédéfinie son effectuées en forme de rampe.

7. Procédé selon l'une des revendications 1 à 6, **caractérisé en ce que** le retour des gaz d'échappement (12) est fermé.

8. Procédé selon l'une des revendications 1 à 7, **caractérisé en ce que** si la température (T) du moteur diesel (16) est inférieure au premier seuil (T₁), des charges électriques sont mises en circuit jusqu'à ce que la température (T) du moteur diesel (16) dépasse le deuxième seuil (T₂).

9. Arrangement de régulation pour le chauffage de l'habitacle et le moteur diesel d'un véhicule automobile comprenant
- un capteur de température (15) pour la température du moteur diesel (16),
- un capteur de pression (14) pour la pression d'aspiration (MAP) du moteur diesel (16) et
- un clapet d'étranglement commandable (13) pour l'arrivée d'air vers le moteur diesel (16),
**caractérisé en ce que** l'arrangement de régulation est configuré de telle sorte qu'il mesure directement ou indirectement la température (T) du moteur diesel (16) par le biais du capteur de température (15) et, si cette température est inférieure à un premier seuil (T₁), réduit l'arrivée d'air vers le moteur diesel (16) par le biais du clapet d'étranglement (13) de manière à atteindre une valeur prédéfinie actuelle (MAP_ref, MAP_ref_mod) de la pression d'aspiration, la tenue de cette valeur (MAP_ref, MAP_ref_mod) de la pression d'aspiration pouvant être contrôlée par le biais du capteur de pression (14), jusqu'à ce que la température du moteur diesel dépasse un deuxième seuil (T₂).
